# EUROPEAN PATENT APPLICATION

(11) **EP 2 479 106 A2**
(43) Date of publication of application: **25.07.2012**
(21) Application number: 12150553.1
(22) Date of filing: 10.01.2012
(51) Int. Cl.: B64C 3/48, B64C 3/50, B64C 9/24

(54) **Leading edge device for an aircraft**

(30) Priority: 25.01.2011 GB 201101274
(71) Applicant: Airbus Operations Limited, Bristol, Bristol BS99 7AR (GB)
(72) Inventor: Dodd, Daniel, Bristol, Bristol BS99 7AR (GB)
(74) Representative: Butler, Daniel James

(57) **Abstract**

A leading edge section (2) of an aircraft wing comprises a main wing body portion (3), a droop nose high-lift device (1) mounted adjacent to the fore region of the main wing body portion, and a door (10). The droop nose high-lift device is moveable between a stowed position and a first deployed position. When the droop nose high-lift device is in the first deployed position and the door (10) is in an open position, an air flow region (7) is exposed such that, during use, air flows through the air flow region from the lower surface to the wing upper surface of the wing. The door (10) is also arranged to be moved during flight to control the amount of airflow through said air flow region (7).

## Description

### Background of the Invention

The present invention concerns aircraft, and in particular, but not exclusively to those having high-lift leading edge devices and to the use thereof. The invention also concerns an aircraft wing having such a high-lift leading edge device, an aircraft wing section, high-lift leading edge devices *per se*, to a method of operating an aircraft and to other related aspects.

High-lift leading edge devices are often used on an aircraft to increase the available maximum lift, particularly during take-off and landing.

Two known high-lift leading edge devices are the slat and the droop nose high-lift device.

Slats are generally moveable between a retracted position in which the slat is located against the leading edge of the wing and a deployed position in which the slat is deployed downwards and forwards away from the main portion of the wing. Air flows around the deployed slat such that the slat has its own flow field. The interaction between the *separate* flow fields of the slat and the main wing body portion respectively is able to reduce the flow velocity induced by the leading edge of the main wing body portion and change the pressure gradients on the wing surface to reduce the susceptibility to detachment of airflow from the wing, thereby allowing the aircraft to be flown at higher angles of attack than could otherwise be achieved. The slats are typically mounted for movement on tracks which can be bulky and heavy or other complicated mechanisms. The leading edge devices disclosed in US 4,399,970, US 5,839,699 and US 5,927,656 may be considered as disclosing slat devices.

Droop nose high-lift devices, typified by those disclosed in US 4,200,253 and EP 0 302 143, are moveable between a stowed position and a deployed position in which the droop nose high-lift device is turned nose-down. During high incidence flight a droop nose high-lift device reduces the leading edge suction peak experienced by the free stream onset flow. This is due to the deployed leading edge being better aligned to the freestream such that the flow does not negotiate the relatively low radius of curvature of the clean leading edge. The result is a reduction in the acceleration experienced by the flow and a subsequent reduction in the severity of the adverse decelerating pressure gradient further downstream. The net effect is a delay in the onset of wing stall to higher incidences compared to the undeployed wing geometry

It will be understood, therefore, that the benefits of the slat and droop nose high-lift device respectively, exist as a result of different aerodynamic behaviour. In addition, the two devices differ in that movement of a slat is usually described by a combination of a component of rotation and a relatively large component of translation, whereas the movement of a droop nose high-lift device is usually described by just a rotation, as shown for example in US 4,200,253 and EP 0 302 143, with little or zero translational movement Also, droop nose high-lift devices may be inherently quieter, and better meet current noise level requirements, than other high-lift devices such as slats.

Droop nose high-lift devices are generally sealed or abutted against the adjacent portion of the main wing on the upper and/or lower surfaces to form a continuous aerofoil surface. As such, the movement of the droop nose high-lift device over the main wing element leading edge, as occurs during deployment, requires a complex sealing system or camming arrangement, such as that shown in EP 0 302 143. Such a system or arrangement may often only be reliably achieved with the addition of considerable weight, complexity and cost.

US2007/0241236 of the prior art discloses an arrangement incorporating aspects of both the above-described prior art devices. In particular, US2007/0241236 concerns a droop nose high-lift device which envisages permitting, during certain flight conditions, air to flow onto the upper surface of the wing via a slot formed between the droop nose high-lift device and the main wing body portion to which the droop nose high-lift device is mounted. The shape of the device of US2007/0241236 is similar to that of a droop nose device, whereas the flow of air around the device (and via the open slot) when deployed is similar to that of a deployed slat. The flow of air via the slot formed in the droop nose high-lift device proposed in US2007/0241236 could be improved as could the control of such airflow.

The present invention seeks to mitigate the above-mentioned problems. Alternatively or additionally, the present invention seeks to provide an improved high-lift device, such as a droop nose high-lift device. Alternatively or additionally, the present invention seeks to provide a high-lift device, such as a droop nose high-lift device, which has the benefits of the shape of a droop nose high-lift device, the aerodynamic advantages provided by a conventional slat, and which improves the degree of control over the airflow around the device when deployed.

### Summary of the Invention

According to the present invention there is provided a leading edge section of an aircraft wing, the section comprising a main wing body portion, a droop nose high-lift leading edge device and a door, which is advantageously moveable to control the amount of airflow in, around or proximate to the droop nose high-lift device. In an embodiment of the invention, the droop nose device is associated with a door that provides control over the injection of air into the boundary layer on the upper surface of the wing. Such control may be useful in facilitating efficient operation of the droop nose device in different high-lift configurations and/or flight conditions as will be explained in further detail below.

The main wing body portion has an upper surface, a lower surface, a fore region and an aft region. It will be understood that the "main wing body portion" may define the whole of or part of the main aircraft wing (excluding the droop nose leading edge device). When the main wing body portion defines only part of the main wing, it may be in the form of a leading edge component for fitting to the rest of the main wing. The droop nose high-lift device is mounted adjacent to the fore region of the main wing body portion. The droop nose high-lift device has a fore region, an aft region, an upper surface, and a lower surface. The droop nose high-lift device may also have a trailing edge portion at the aft region, the trailing edge portion defining part of the upper surface of the droop nose high-lift device. The droop nose high-lift device is moveable between a stowed position and a first deployed position. The wing leading edge section is so arranged that when the droop nose high-lift device is in the first deployed position and the door is in an open position an air flow region is exposed such that, during use, air flows through the air flow region from the lower surface of the wing to the upper surface of the wing. The door is advantageously arranged to be moved during flight to control the airflow through said air flow region. The door may be in the form of a panel. The door may be in the form of a moveable flap.

The air flow region is preferably so configured and arranged that, in use, air flowing from the air flow region first flows onto the upper surface of the wing at a position between the fore region of the droop nose high-lift device and the aft region of the main wing body portion, preferably first flowing onto the upper surface of the wing at a position at or near the junction between the droop nose high-lift device and the main wing body portion. Preferably, the wing is so arranged that at least during certain flight conditions air flows through the air flow region and into a boundary layer on the upper surface of the wing. The air flow region may extend from an entrance to an exit. The air may exit the air flow region in a direction substantially parallel to the local shape of the upper surface of the wing. Injecting air onto the upper surface of the wing, or more preferably injecting air into the boundary layer on the upper surface of the wing, introduces extra momentum to the boundary layer. Mixing high-energy flow (extra momentum) into the relatively slow-moving air of the boundary layer energises the boundary and may reduce its susceptibility to separation from the aerofoil surface. Injecting air flow into the boundary layer may therefore allow the aircraft to achieve an increase in the maximum achievable lift coefficient, hence reducing stalling speed.

Above, reference is made to the "boundary layer". As is known in the art, the boundary layer is a thin layer formed at boundaries in almost any fluid flow system, such systems often being so modelled that the boundary layer is the only region in which viscosity is deemed to have an effect. It shall be understood that the thickness of the boundary layer may be defined in a number of ways. By way of example, the thickness of the boundary layer may be measured from the displacement thickness. Alternatively the thickness may be measured from the momentum thickness. The thickness of the boundary layer may also be defined by the height above the surface, over which the fluid flows, at which height the fluid velocity reaches a given percentage of the freestream velocity, for example 99% of the freestream velocity. The air flow through the air flow region may include itself a boundary layer, said boundary layer having been formed on a surface that defines the air flow region or a part thereof.

The air flow region (i.e. that 3-dimensional region defined within the envelope of the wing via which, in use, air flows onto the upper surface of the wing) may be defined by the free space between the droop nose high-lift device and the main wing body portion. The main wing body portion may be arranged to be substantially fixed in position whilst the droop nose device is deployed. The main wing body portion may however include a moveable component, which is arranged to move with the droop nose device. Such a component may for example include part of the lower surface of the wing. The air flow region may however be in the form of a passageway specially formed in the droop nose high-lift device or in the main wing body portion. The air flow region may include a space defined between the trailing edge portion of the droop nose high-lift device and the main wing body portion.

The wing may be so arranged that the air flow region extends from an entrance formed between the lower surface of the main wing body portion and the lower surface of the droop nose high-lift device. The wing may be so arranged that the air flow region extends to an exit formed between the upper surface of the main wing body portion and the upper surface of the droop nose high-lift device. The entrance may be generally slot-shaped. The exit may be generally slot-shaped. Thus, the air flow region, when formed, may comprise a slot at the upper surface of the wing. The air flow region may be considered as a passageway. The air flow region may be defined by aerodynamically shaped surfaces. The air flow region may be defined at least in part, and possibly entirely, by parts or surfaces of the main wing body portion (excluding the droop nose high-lift device). For example, the air flow region may be defined by a passageway formed in the main wing body portion. The air flow region may be defined at least in part, and possibly entirely, by parts or surfaces of the droop nose high-lift device (excluding the main wing body portion). For example, the air flow region may be defined by a passageway in the droop nose high-lift device.

The cross-sectional area of the air flow region, when the droop nose high-lift device is in its first deployed position, may reduce in a direction from the entrance to the exit. Thus the air flow region may be formed as a converging airflow passageway.

The door may be mounted at or near (i.e. proximate to) the region between the lower surface of the main wing body portion and the lower surface of the droop nose high-lift device. The door may be mounted at or near to the lower surface of the wing. The door may be attached to the main wing body portion. The door may be attached to the droop nose device. The door is preferably mounted for rotational movement between its open and closed positions. The door may however be arranged to translate between its open and closed position, for example by means of sliding movement.

The door may be so arranged that, at least when the droop nose high-lift device is in the first deployed position, the door is moveable to a closed position and/or to one or more open positions. When the door is in its closed position, air may be substantially prevented from flowing via said air flow region. The door when open may increase drag whilst enhancing available lift. The door when closed may therefore generate less drag when open. Being able to close the door and generate less drag may be of benefit during take-off for example. The door may be arranged to act, when open and during flight, to divert air to flow via the air flow region onto the upper surface of the main wing body portion. The door may for example be arranged to act as an air scoop. The position of the door may be controlled to be one of many different open positions. The position of the door may therefore be adjusted to provide aerodynamically efficient diversion of air into the air flow region. Arranging the door for pivoting movement may assist in enabling the door to act as an air diverting means.

The wing may be so arranged that when the droop nose high-lift device is in the stowed position said air flow region is closed or otherwise not formed. In the case where said air flow region is closed when the droop nose high-lift device is in the stowed position, the closing of the air flow region may be effected by means other than the door (or be closed partly by the door and partly by other means).

It will be understood that the droop nose high-lift device may be moveable to more than one deployed position. The droop nose device may be moveable to any one of at least five different deployed positions. The position of the droop nose device when deployed may be infinitely variable. The droop nose device may be so arranged that its position when deployed is actively controlled. The deployed position may differ in accordance with the flight conditions. For example, the deployed position of the droop nose high-lift device on take-off may be different to the deployed position of the droop nose high-lift device on landing. Thus, the droop nose high-lift device may be moveable to a second deployed position different from the first deployed position. The wing may be so arranged that when the droop nose high-lift device is in the second deployed position said air flow region is closed or otherwise not formed. The second deployed position may be between the first deployed position and the stowed position. The droop nose device may be deployed to its first deployed position during landing. The droop nose device may be deployed to its second deployed position during take-off. As an alternative, the droop nose device may be deployed in substantially the same position during takeoff and landing.

The wing may be so arranged that when the droop nose high-lift device is in the stowed position, a portion of the aft region of the droop nose high-lift device abuts the upper surface of the main wing body portion, preferably so that the upper surfaces of the droop nose high-lift device and the main wing body portion together form part of a continuous aerofoil surface. The main wing body portion may comprise a fixed leading edge which abuts, at least during certain flight conditions, the droop nose high-lift device when in a deployed position. The fixed leading edge of the main wing body portion may be shaped and/or configured to ensure that contact with the aft region of the droop nose high-lift device is maintained during flight and when the droop nose high-lift device is deployed to the second deployed position mentioned above.

The droop nose high-lift device is conveniently rotatably mounted for movement between its stowed and deployed position(s). The axis of rotation of the droop nose high-lift device may coincide with the body of the wing. It shall be understood that the axis of rotation need not necessarily be defined by a component. The axis of rotation may be an axis about which the droop nose high-lift device is able to be notionally rotated to achieve a position change. The axis of rotation is preferably fixed relative to the wing. The droop nose high-lift device may be so arranged that the position of the droop nose high-lift device in its deployed position(s) and the position of the droop nose high-lift device in its stowed position are such that a simple rotation would map one of the positions onto the other, even if the motion used in reality is not in the form of simple rotation. The movement of the droop nose high-lift device between its stowed and deployed position(s) may be achieved using a series of movements, including translations, by using for example an arrangement of cranks and sliders.

The droop nose high-lift device may be supported by a plurality of struts. For example, the droop nose high-lift device may be supported by struts located at either spanwise end of the droop nose high-lift device and attached to the adjacent wing structure. The struts may be rotatably attached to the adjacent wing structure.

The present invention also provides a method of operating a droop nose high-lift device. The method may include a step of providing an aircraft including an aircraft wing according to the present invention. The method may be in the form of operating an aircraft, the aircraft having a wing comprising a main wing body portion and a droop nose high-lift device mounted fore of the main wing body portion. The step of operating the aircraft includes moving the aircraft relative to the surrounding air as is the case during take-off or landing. The method may comprise a step performed during operation of moving the droop nose high-lift device to a first deployed position to define an air flow region between the droop nose high-lift device and the main wing body portion. The method may comprise a step performed during flight of moving the door to cause air to flow from beneath the wing, through the air flow region, and onto the upper surface of the main wing body portion. The method may be performed such that the droop nose high-lift device is moved to its first deployed position and the door is opened, the open door and air flow region act to create an air circulation effect around the outer end of the droop nose high-lift device. This air circulation effect may be similar to the air circulation effect caused by a deployed/slotted slat, thus reducing the loading of the wing leading edge for example. Such a reduction in loading may reduce the tendency of the wing flow to separate in the area that is critical to maximising the maximum lift coefficient, CLmax, thus increasing the maximum incidence of the wing and the high-lift performance of the aircraft.

The method may comprise a step performed during flight of moving the door to restrict or prevent air from flowing through the air flow region.

The method may comprise a step performed during flight of moving the droop nose high-lift device to a second deployed position such that said air flow region is not formed or air is restricted or prevented from flowing through the air flow region, irrespective of the position of the door. The method may be so performed that during flight when the droop nose high-lift device is in its first deployed position the door is opened at an angle that substantially matches the local onset flow incidence. The method may include a step of actively controlling the position of the door. The method may include a step of controlling the position of the door in dependence on the aerodynamic loads sustained by the door. The aerodynamic loads sustained by the door by for example be measured and such measurements may be used when controlling the position of the door. The position of the door may be controlled to improve (preferably to optimize or maximize) the intake flow into the device and to reduce (preferably to optimize or minimize) the adverse effects of flow separation and drag on the device and the wing. The fixed leading edge of the main wing body portion may be shaped and/or configured to create a slot-shaped passageway from the lower surface of the wing to the upper surface of the wing.

The door may be controlled such that air is caused to flow through the air flow region only during certain flight conditions. These certain flight conditions might occur only during a high-lift manoeuvre. Additionally, or alternatively, those certain flight conditions might occur only at certain angles of incidence of the wing. Additionally, or alternatively, those certain flight conditions might occur only during landing.

The aircraft includes a control means that receives signals representative of one or more operating parameters and converts such signals into a control signal that is outputted and which effects the control of the movement of the door. The signals representative of one or more operating parameters may include a signal representative of the attitude of the aircraft wing. The signals representative of one or more operating parameters may include a signal representative of the angle of attack. The signals representative of one or more operating parameters may include a signal representative of the position of the high-lift device. The signals representative of one or more operating parameters may include a signal representative of the direction of airflow in the region of the door. The signals representative of one or more operating parameters may include a signal representative of the position of the door. The signals representative of one or more operating parameters may include a signal representative of forces on the door. The signals representative of one or more operating parameters may include a signal representative of the speed of the aircraft. The signals representative of one or more operating parameters may include a signal representative of the aircraft's altitude.

The present invention also provides an aircraft wing comprising a leading edge section according to the invention as described or claimed herein.

The present invention also provides an aircraft wing comprising a leading edge section according to the invention as described or claimed herein.

The present invention also provides an aircraft including an aircraft wing according to the invention as described or claimed herein.

The aircraft may be a fixed wing aircraft, as opposed to a rotary winged vehicle. The aircraft may be a passenger aircraft. The aircraft may be of a size equivalent to an aircraft designed to carry more than 20 passengers, and more preferably more than 50 passengers. The aircraft preferable has a mass greater than 30 tonnes dry weight.

The present invention also provides a droop nose high-lift device, the device being suitable for use as the droop nose high-lift device of the aircraft wing according to the invention as described or claimed herein.

The present invention further provides a kit including a droop nose high-lift device and a door, the kit being suitable for producing an aircraft wing according to the invention as described or claimed herein. The aircraft wing, which need not form part of the kit, may typically comprise a main wing body portion having an upper surface and a lower surface, a fore region and an aft region. The droop nose high-lift device of the kit may include a mounting mechanism for mounting the device mounted adjacent to the fore region of the main wing body portion of such a wing. The droop nose high-lift device may have a fore region, an aft region, an upper surface, a lower surface, and a trailing edge portion at the aft region, the trailing edge portion defining part of the upper surface of the droop nose high-lift device. The mounting mechanism of the droop nose high-lift device may allow for movement of the droop nose high-lift device, when the device is installed on such a wing, between a stowed position and a first deployed position. The door may be configured and/or shaped as to be suitable for mounting at or near the region between the lower surface of the main wing body portion of such a wing and the lower surface of the droop nose high-lift device. The door and the droop nose high-lift device of the kit being so shaped that, when the device and door are installed, the door can move to control the flow of air through a region defined in part by the aft region of the device.

The kit is preferably so configured that when the droop nose high-lift device and the door are installed on an aircraft wing and the droop nose high-lift device is in the first deployed position an air flow region is defined between the trailing edge portion of the droop nose high-lift device and the main wing body portion of the wing.

The present invention also provides a door so shaped and arranged as to be suitable for use as the door of the aircraft wing according to the invention as described or claimed herein.

It is within the scope of the present invention to provide an aircraft wing comprising (a) a main wing body portion having an upper surface and a lower surface, a fore region and an aft region, and (b) a droop nose high-lift device mounted adjacent to the fore region of the main wing body portion, the droop nose high-lift device having a fore region, an aft region, an upper surface, and a lower surface, and a trailing edge portion at the aft region, the trailing edge portion defining part of the upper surface of the droop nose high-lift device, wherein the wing has an upper surface partly defined by the upper surface of the main wing body portion and partly defined by the upper surface of the droop nose high-lift device, the wing has an lower surface partly defined by the lower surface of the main wing body portion and partly defined by the lower surface of the droop nose high-lift device, there is further provided a door moveable between a closed position and an open position, the droop nose high-lift device is moveable between a stowed position and a first deployed position, and the wing is so arranged that when the droop nose high-lift device is in the first deployed position and the door is in the open position an air flow region is exposed, the air flow region having a fore inlet on the lower surface of the wing, and having an aft outlet on the upper surface of the wing, the spanwise position of the outlet being between the fore region of the droop nose high-lift device and the aft region of the main wing body portion.

Thus, in use, when the door is in the open position an air flow region is exposed such that air flows onto the upper surface of the wing, the flow of air from the air flow region first flowing onto the upper surface of the wing at a position between the fore region of the droop nose high-lift device and the aft region of the main wing body portion. The door may also be arranged to be moved during flight to control the airflow through said air flow region.

The present invention may have application in relation to a leading edge high-lift device not being in the form of a droop nose device. The droop nose device may for example be replaced with a deployable slat. Thus, it is within the scope of the present invention to provide an aircraft wing section comprising (a) a main wing body portion having an upper surface and a lower surface, a fore region and an aft region, and (b) a device, for example a high-lift device, moveably mounted adjacent to the fore region of the main wing body portion, the high-lift device having a fore region, an aft region, an upper surface, and a lower surface, wherein there is further provided a door, the high-lift device is moveable between a stowed position and a first deployed position, and the wing section is so arranged that when the high-lift device is in the first deployed position and the door is in the open position an air flow region is defined such that, during use, air flows from the lower surface of the wing via the air flow region onto the upper surface of the wing. The door is preferably arranged to be moved during flight to control the airflow through said air flow region. The device may be in the form of a slat or a droop nose device.

The present invention may also have application where the air flow region is formed in the wing and is not defined in a moveable leading edge device or between a moveable leading edge device and the main wing body, such as for example application in a clean wing.

The invention yet further provides a leading edge section of an aircraft wing comprising a door movable to control, in use, the amount of airflow through an air flow region (for example a passageway, slot or the like) that extends between a lower surface on the wing to an upper surface on the wing. The air flow region may be defined between portions of the wing that remain in fixed position during take-off, flight, and landing of the aircraft. It will be understood that the air flow region is shaped such that air may be considered as flowing through the wing and that the air flow region may be defined between a first, fore, portion of the wing and a second portion of the wing aft of said first, fore, portion.

The invention also provides a method of operating an aircraft, the aircraft having a wing including a door, the method comprising a step of arranging the wing, during operation, such that air flows from beneath the wing through an air flow region to an upper surface of the wing, the door being moveable to restrict or prevent air from flowing through the air flow region.

The droop nose device of the present invention may be considered as an improvement of the device described and claimed in US2007/0241236. The contents of that application are fully incorporated herein by reference. The claims of the present application may incorporate any of the features disclosed in that patent application.

It will be appreciated that the various aspects of the invention as described herein are closely related and that therefore features of one aspect of the invention may be incorporated into other aspects of the invention as described herein. Thus, for example, any aspect of the method of the invention may use, or be performed on, an aircraft according to any other aspect of the invention. Similarly, the aircraft according to any aspect of the invention may be so configured as to be suitable for use in a method according to the invention. Features of the apparatus of the invention may be incorporated into the method of the invention and vice versa. Also, aspects of this invention in which the provision of a droop nose device is not essential may incorporate features of aspects of this invention in which a droop nose device is provided. For example, a fixed fore portion of the wing (for example including the leading edge of the wing) could be considered as being equivalent to the droop nose device, whereas a portion of the wing aft of said fixed fore portion of the wing could be considered as being equivalent to the main wing body portion.

### Description of the Drawings

Various embodiments of the invention will now be described, by way of example only, with reference to the accompanying schematic drawings of which:
- Fig. 1: shows a cross-sectional view of a deployed droop nose leading edge high-lift device in a first embodiment of the invention,
- Fig. 2: shows a cross-sectional view of the droop nose device of the first embodiment of the invention illustrating schematically the mechanism for deploying the device,
- Fig. 3: shows a cross-sectional view of a droop nose leading edge high-lift device in a second embodiment of the invention, the device being deployed in a position for take-off,
- Fig. 4: shows a cross-sectional view of the droop nose device of the second embodiment, the device being deployed in a position for landing,
- Fig. 5: shows am aircraft of a type suitable for employing either the first or the second embodiments, and
- Fig. 6: shows a cross-sectional view of a fixed "clean" wing of a third embodiment of the invention.

### Detailed Description

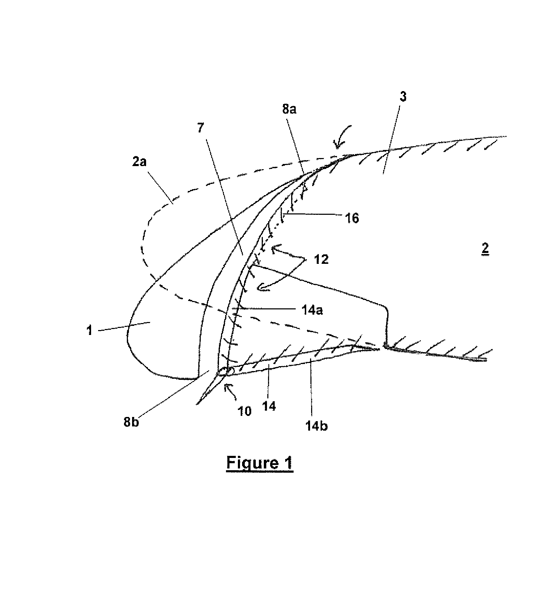

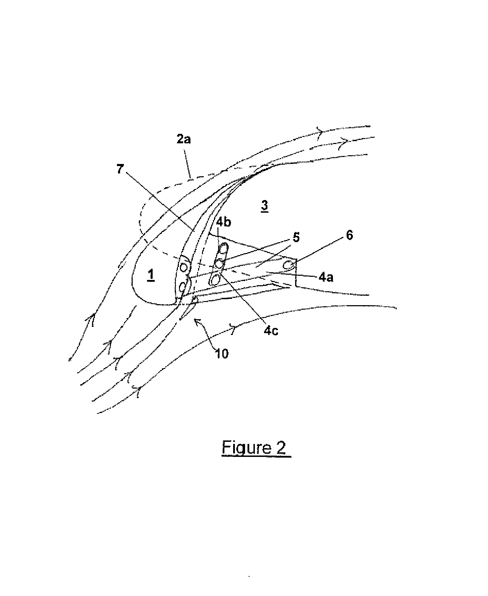

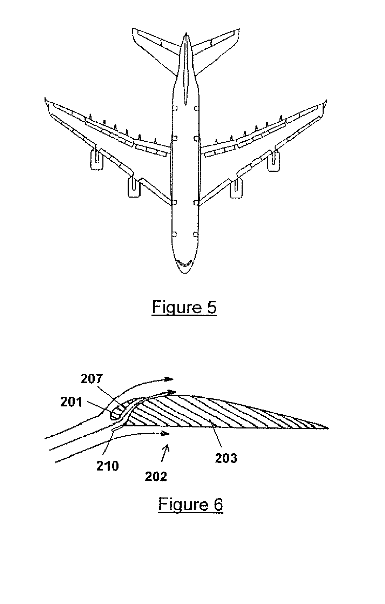

Figures 1 and 2 show a droop nose high-lift device 1 which forms part of a wing 2, only the leading edge section of which being shown. It will be appreciated that the wing section illustrated could form part of a larger component for example the whole of the wing or could be a separately manufactured section of wing that is fitted to the rest of the wing during assembly of the aircraft. The rest of the wing may for example be as shown in the aircraft illustrated in Figure 5. The droop nose high-lift device 1 is attached to the adjacent main wing body portion 3, via a hinge mechanism 5 (shown in Figure 2). The droop nose high-lift device 1 is moveable between a stowed position and two principal deployed positions. Both Figures illustrate the droop nose high-lift device 1 in the first deployed position adopted during landing, which in this embodiment is achieved by means of a 25 degree downward rotation of the droop nose high-lift device from the stowed position. During take-off, the droop nose high-lift device is rotated by 22 degrees downwards from the stowed position to a second deployed position, which is different from the deployed position for landing. The stowed position of the droop nose high-lift device 1 is indicated by the dotted lines 2a in Figures 1 and 2. In the stowed position, the droop nose high-lift device is sealed against the main wing body portion 3 by means of a rubber lip (not shown) at the region of the lower end of the trailing edge of the droop nose high-lift device 1 that abuts the lower end of the leading edge of the adjacent wing portion.

As can be seen from Figures 1 and 2, the droop nose high-lift device is so shaped that when in the deployed position, there exists a cavity, formed between the rearward surface of the droop nose high-lift device 1 and the leading edge 12 of the main wing body portion 3. In the configuration adopted for landing, there exists an air flow region 7 between the droop nose high-lift device 1 and the adjacent main wing body portion 3. The air flow region 7 is in the form of a passageway, the air flow region comprising slots 8a & 8b on the upper and lower surfaces of the wing 2 respectively. Air thus flows from the lower entry slot 8b, via the passageway 7 and is injected into the boundary layer on the upper surface of the wing as the air exits via the slot 8a on the upper surface.

Mounted on the main wing body portion there is a door 10. In use during certain high-lift configurations of the wing and droop nose leading edge device, the door is mechanically deployed outwardly into the oncoming airflow to scoop the air into the passageway. Thus the door acts as a scoop that is moveable to control the amount of air that flows via the passageway. The door may be used to actively guide the airflow through the passageway and onto the upper surface of the wing in order to augment the upper surface boundary layer and synthesise a slotted slat effect on the outer spanwise portion of the droop nose high-lift device. In aerodynamic terms, the flow of air caused by the door and passageway improves the local flow conditions in the negative pressure peak and adverse pressure gradient region on the forward upper wing surface to delay the flow breakdown and increase the wing flow separation incidence. Furthermore, the flow of air via the passageway 7 creates a circulation effect around the outer end of the droop nose high-lift device 1 similar to a slotted slat effect to reduce the loading of the wing leading edge. The reduction in loading reduces the tendency of the wing flow to separate in the area that is critical to wing absolute CLₘₐₓ thus increasing the maximum incidence of the wing and the high-lift performance of the aircraft. Further discussion of the potentially advantageous aerodynamic effects afforded by means of a droop nose device which additionally acts to inject energized air into the boundary layer on the upper surface of the wing is provided in US2007/0241236. Further discussion of the potential advantages of having an actively controlled door is provided below.

The first embodiment of the invention therefore allows the wing 2 to be used at higher angles of attack, than would otherwise be possible for a droop nose leading edge arrangement thereby allowing a higher maximum lift coefficient to be achieved. Various features of the first embodiment will now be described in further detail.

The main wing body portion 3 includes a moveable part 14 formed by a leading edge panel 14a, at the leading edge 12 of the main wing body portion 3, and a lower surface panel 14b. The door 10 is mounted in the region of the junction between the leading edge panel 14a and the lower surface panel 14b. When the droop nose device 1 is deployed, the moveable part 14 of the main wing body portion 3 moves to a deployed position in which the leading edge panel 14a moves to define, in combination with the aft region of the droop nose device 1, the passageway 7. The lower surface panel 14b also moves to correspond to the position of the lower surface of the droop nose device 1, such that when the door 10 is closed a substantially flush and aerodynamic surface is defined on the lower surface of the wing. When the moveable part 14 is stowed (when the droop nose device 1 is also stowed) the leading edge panel 14a slides partially into a recess, indicated by the broken lines 16 in Figure 1, in the leading edge portion 12 of the main wing body portion 3.

The lower surface panel 14b also moves to maintain the aerodynamic profile of the lower surface of the wing 2, indicated by the dotted lines 2a. In the first embodiment, the moveable part 14 of the main wing body portion 3 is arranged to move with the droop nose leading edge device.

In take-off and cruise high-lift configurations, the droop nose device 1 is deployed to a second position, and the door 10 is closed and sealed such that airflow through the passageway 7 is blocked. Deploying the droop nose high-lift device 1 in the second deployed position is achieved by means of a 22 degree downward rotation of the droop nose high-lift device from the stowed position (i.e. deployed slightly less than in the first deployed position). In this configuration the droop nose device 1 will act like a standard droop nose high-lift device. In such a configuration (not illustrated) the trailing edge of the upper surface of the droop nose high-lift device is in contact with the upper surface of the wing fixed leading edge (i.e. so that upper slot 8a is not formed or otherwise closed). In this configuration (when the droop nose device 1 is deployed to the second position), the fixed leading edge of the main wing body portion is specifically shaped to ensure that contact is maintained.

When the droop nose high-lift device is in the stowed position, the passageway 7 is not formed as the aft surface of the droop nose high-lift device abuts the fore surface of the main wing body portion 3. Similarly, the leading edge of the main wing body portion is shaped to ensure that the exit 8a of the passageway between the movable part and the fixed leading edge is sealed/not formed in the take-off configuration and open in the landing configuration.

In use, for the maximum-lift landing configuration, which requires a higher leading edge deployment angle than the take-off configuration, the droop nose device 1 is deployed to the (25 degree) first deployed position. The door 10 is opened to an angle that matches the local onset flow incidence (stagnation point). This is to optimise the intake flow into the device and to minimise the adverse effects of flow separation and drag on the device and the wing. In this configuration the leading edge of the main wing body portion is specifically shaped to create a passageway from the open door 10 to the trailing edge at the upper surface of the droop nose device. As shown schematically in Figure 1, the internal shape of the passageway is shaped so that the airflow entry into the passageway is aerodynamically optimized. The passageway converges in cross-sectional area, toward the exit on the upper wing surface. The converging passageway acts to increase local air speed/pressure with distance along the passageway and enhances the energizing of the boundary layer on the upper surface of the wing.

Figure 2 shows the droop nose device operating aerodynamically in the maximum-lift landing configuration with the door 10 open and controlled so that its position optimizes the flow of the oncoming free stream flow through the lower slot opening 8b. Figure 2 also shows the way the flow streams pass around and through the high-lift device and how the different boundary layers of the deployed leading edge and the slot/fixed leading edge converge on the upper surface to become confluent.

Figure 2 shows the deployment mechanism that is used to move the droop nose device between its stowed and deployed positions. The hinge mechanism 5 comprises a main arm 4a, drive arm 4b and connecting arm 4c. The axes of rotation of each of the main arm 4a, drive arm 4b and connecting arm 4c extend along the wing 2 in a direction approximately parallel to the leading edge of the wing 2. The main arm 4a is mounted at its base for rotation about an axle 6. The opposite end of the main arm 4a is connected to the droop nose high-lift device 1. The connecting arm 4c is rotatably mounted on the main arm 4a and to the drive arm 4b, thus connecting the drive arm 4b to the main arm 4a. The drive arm 4b is connected to a rotary actuator (not shown) which thus effects rotation of the drive arm 4b, which by means of the connecting arm 4c drives the main arm 4a, thus moving the droop nose high-lift device 1 between a stowed position and a deployed position.

It should be noted that at different spanwise positions along the wing, the structure of the droop nose device incorporates different internal panels, seals and doors to ensure efficient flow of air through the device from the lower surface to the upper surface, especially in the vicinity of the structural supports and the deployment arms and drive mechanisms.

The opening and closing of the door 10 is effected by a suitably arranged rotary actuator (not shown) which is connected to a controller (not shown). The controller receives during operation signals concerning the position of the door. The controller is pre-programmed with data concerning the preferred position of the door according to the particular high-lift configuration required.

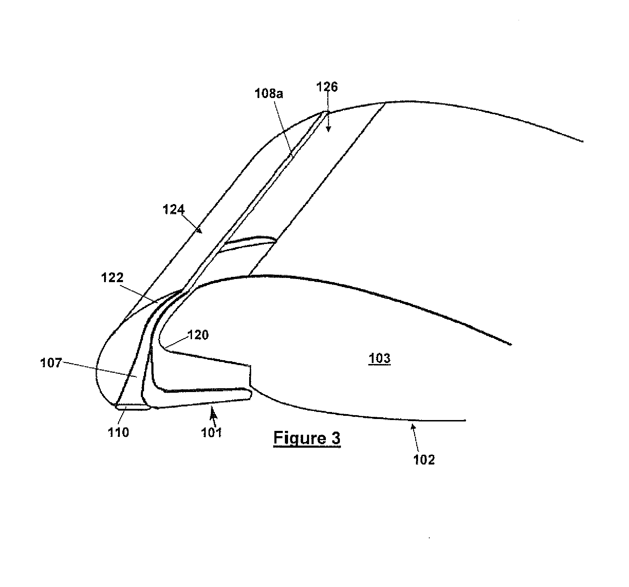

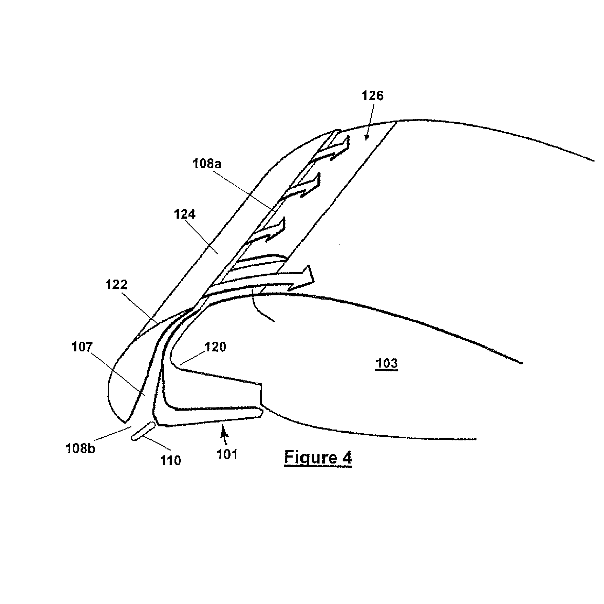

Figures 3 and 4 show an aircraft wing section according to a second embodiment of the invention, which could be present on an aircraft or wing therefor of a type shown in Figure 5. In contrast to the first embodiment, in which the airflow passageway in the wing could be considered as being formed by the space between the droop nose device and the main wing body portion, in the second embodiment, the airflow passageway is formed wholly within the droop nose device. In this case, the door is rotatably mounted on the droop nose device.

Thus, Figures 3 and 4 show an aircraft wing section 102 comprising a main wing body portion 103 and a droop nose high-lift device 101 mounted adjacent to a fore region 120 of the main wing body portion 103. The trailing edge portion 122 of the droop nose device 101 defines part of the upper surface 124 of the droop nose high-lift device 101. A door 110 is rotatably mounted on the droop nose high-lift device 101. The droop nose device is moveable between a stowed position (not shown) and a first deployed position (as shown in Figs 3 and 4) for landing. The droop nose device is also moveable to second and further deployed positions for take-off and other flight conditions requiring a high-lift configuration of the wing.

Figure 4 shows the wing section 102 arranged with the droop nose high-lift device in the first deployed position and the door in an open position. In this configuration an air flow passageway 107 is exposed having a slot-shaped inlet 108b positioned on the lower surface of the wing between the fore region of the droop nose high-lift device and the aft region of the droop nose high-lift device. When landing, the position of the door 110 is controlled to open (as shown in Figure 4) and air flows from beneath the wing 102 via the passageway 107 and into the boundary layer on the upper surface 126 of the wing. Air injected into the boundary layer on the upper surface energises the boundary layer and reduces or delays the onset of airflow separation. Air exits the passageway via slot-shaped outlet 108a positioned proximate to the junction between the trailing edge of the droop nose high-lift device and a fore region of the main wing body portion.

The position of the door 110 is controlled by a control unit (not shown) so as to control the amount of airflow through the air flow passageway 107. The door is mounted proximate to the air inlet 108b.

Figure 3 shows the door 110 in the closed position whilst the droop nose device 101 is deployed, the door 110 thus preventing air flowing via the passageway 107. Air may also be prevented from flowing via the passageway 107 by means of moving the droop nose high-lift device to the stowed position, wherein the air outlet 108a is closed by means of the aft region of the droop nose high-lift device 101 abutting the upper surface 126 of the main wing body portion 103. In such a stowed position the upper surfaces of the droop nose high-lift device 101 and the main wing body portion 103 together form part of a continuous upper surface of the wing.

During landing of an aircraft, the droop nose high-lift device is moved to the first deployed position and the door is opened so that air flows from beneath the wing through an air flow region to an upper surface of the wing. On landing, the airflow via the passageway gives rise to extra lift (possibly maximum lift) although the deployment of the door, required to enhance such extra lift, gives rise to extra drag. The position of the door is controlled so as to be at an angle that substantially matches the local onset flow incidence. The angle of local onset flow incidence can be calculated by virtue of measured parameters including for example parameters relating to one or more of aircraft speed, angle of deployment of the droop nose device, attitude of the aircraft, and local atmospheric conditions. Alternatively, the angle of local onset flow incidence can be measured directly or indirectly for example by measuring local forces on the deployed door.

Once the aircraft has landed the door may be moved to restrict or prevent air from flowing through the air flow region. On take-off, the droop nose high-lift device is moved to a second deployed position, preferably different from the first deployed position, and the door is closed to prevent air from flowing via the passageway. On take-off, the droop nose device can be deployed to provide extra lift, with the door closed to reduce drag.

Figure 6 shows, in cross-section, a fixed "clean" aircraft wing 202 comprising an aft portion 203 and a fore portion 201. An air flow passage 207 is formed between the aft portion 203 and the fore portion 201 of the wing. A door 210 is rotatably mounted on the aft portion 203 to actively control the airflow through the passageway 207. Figure 6 shows the airstream flow around and through the wing 202. It will be seen that the angular position of the door matches the local onset flow incidence in order to optimise the intake flow into the passageway 207. The fore portion 201 is fixed in position relative to the aft portion 203.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The passageway may be formed at least partially in the main wing body portion.

The door could be shaped and/or configured differently and yet still perform the required function, namely adjustably controlling the flow of air via a passageway. The door could for example be in the form of a throttle, valve or the like.

The door may be slidably mounted on either of the droop nose device and the main wing body portion. The drooped nose device may have only a single deployed position that is adopted for any significant length of time during use.

Embodiments of the invention may relate to a leading edge high-lift device in the form of a flap or slat not having a drooped nose profile either or both when stowed and when deployed.

The drooped nose device may be provided separately from the wing. The wing section may be provided separately from the wing. The wing need not be the main wing on the aircraft. For example, the invention may have application in relation to a wing of a tail section of an aircraft.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A leading edge section of aircraft wing, wherein the leading edge section comprises
(a) a main wing body portion having an upper surface and a lower surface, a fore region and an aft region, and
(b) a droop nose high-lift device mounted adjacent to the fore region of the main wing body portion, the droop nose high-lift device having a fore region, an aft region, an upper surface, and a lower surface, and a trailing edge portion at the aft region, the trailing edge portion defining part of the upper surface of the droop nose high-lift device,
the upper surfaces of the main wing body portion and the droop nose high lift device defining at least part of a wing upper surface and the lower surfaces of the main wing body portion and the droop nose high lift device defining at least part of a wing lower surface,
and wherein
the droop nose high-lift device is moveable between a stowed position and a first deployed position,
the leading edge section comprises a door movable to control, in use, the amount of airflow through an air flow region that extends between the wing lower surface and the wing upper surface, and
the leading edge section is so arranged that when the droop nose high-lift device is in the first deployed position and the door is in an open position the air flow region is exposed.

2. A wing leading edge section according to claim 1, wherein the door is mounted at or near the region between the lower surface of the main wing body portion and the lower surface of the droop nose high-lift device.

3. A wing leading edge section according to claim 1 or claim 2, wherein the door is so arranged that when the droop nose high-lift device is in the first deployed position the door is moveable to a closed position in which air is substantially prevented from flowing via said air flow region.

4. A wing leading edge section according to any preceding claim, wherein the door is so arranged that when the droop nose high-lift device is in the first deployed position the door is moveable to an open position in which the door acts, during flight, to divert air to flow via the air flow region onto the upper surface of the main wing body portion.

5. A wing leading edge section according to any preceding claim, wherein the wing is so arranged that when the droop nose high-lift device is in the stowed position said air flow region is closed or otherwise not formed.

6. A wing leading edge section according to any preceding claim, wherein the wing is so arranged that when the droop nose high-lift device is in the stowed position a portion of the aft region of the droop nose high-lift device abuts the upper surface of the main wing body portion so that the upper surfaces of the droop nose high-lift device and the main wing body portion together form part of a continuous aerofoil surface.

7. A wing leading edge section according to any preceding claim, wherein the droop nose high-lift device is moveable to a second deployed position different from the first deployed position, and the wing is so arranged that when the droop nose high-lift device is in the second deployed position said air flow region is closed or otherwise not formed.

8. A wing leading edge section according to any preceding claim, wherein the wing is so arranged that the air flow region extends from (i) an entrance formed between the lower surface of the main wing body portion and the lower surface of the droop nose high-lift device to (ii) an exit formed between the upper surface of the main wing body portion and the upper surface of the droop nose high-lift device.

9. A wing leading edge section according to claim 8, wherein at least one of the entrance and exit is slot-shaped.

10. A wing leading edge section according to claim 8 or claim 9, wherein the cross-sectional area of the air flow region, when the droop nose high-lift device is in its first deployed position, reduces in a direction from the entrance to the exit.

11. A method of operating an aircraft, the aircraft having a wing including a main wing body portion, a droop nose high-lift device mounted fore of the main wing body portion, and a door associated with the droop nose high-lift device, wherein the method comprises a step of arranging the wing, during operation, such that air flows from beneath the wing through an air flow region to an upper surface of the wing, the door being moveable to restrict or prevent air from flowing through the air flow region.

12. A method according to claim 11, wherein the method comprises a step of, during operation, both moving the droop nose high-lift device to a first deployed position and causing the door to be positioned such that air flows from beneath the wing through the air flow region to the upper surface of the wing.

13. A method according to claim 11 or claim 12, wherein the method comprises moving the door from (i) a position in which the flow of air through the air flow region is restricted or prevented to (ii) the position in which air flows from beneath the wing through the air flow region to the upper surface of the wing.

14. A method according to any of claims 11 to 13, wherein the method is so performed that during flight when air is caused to flow through the air flow region to the upper surface of the wing, the door is opened at an angle that substantially matches the local onset flow incidence.

15. An aircraft wing or an aircraft including such a wing, wherein the wing includes a leading edge section as claimed in any of claims 1 to 10.

16. A droop nose high-lift device, the device being suitable for use as the droop nose high-lift device of the leading edge section as claimed in any of claims 1 to 10.

17. A door being so shaped and arranged as to be suitable for use as the door of the leading edge section as claimed in any of claims 1 to 10.

18. A leading edge section of an aircraft wing, the section comprising a main wing body portion, a droop nose high-lift leading edge device and a door, which is moveable to control the amount of airflow in, around or proximate to the droop nose high-lift device.
